Europäisches Patentamt

European Patent Office

Office européen des brevets

(11) Veröffentlichungsnummer: **0 476 416 A2**

## (12) EUROPÄISCHE PATENTANMELDUNG

(21) Anmeldenummer: **91114797.3**

(22) Anmeldetag: **03.09.91**

(51) Int. Cl.5: **C08K 5/00**, C08J 11/00, B07C 5/342

(30) Priorität: **14.09.90 DE 4029167**

(43) Veröffentlichungstag der Anmeldung:
**25.03.92 Patentblatt 92/13**

(84) Benannte Vertragsstaaten:
**DE FR GB IT**

(71) Anmelder: **BAYER AG**

**W-5090 Leverkusen 1 Bayerwerk(DE)**

(72) Erfinder: **Luttermann, Klaus, Dipl.-Physiker
Klasberg 1
W-5204 Lohmar 1(DE)**
Erfinder: **Claussen, Uwe, Dr.
Am Wasserturm 15b
W-5090 Leverkusen 3(DE)**
Erfinder: **Sayed, Aziz El, Dr.
Saarlauterner Strasse 39
W-5090 Leverkusen(DE)**
Erfinder: **Riess, Reinhard, Dr.
August-Kierspel-Strasse 143
W-5060 Bergisch-Gladbach(DE)**

(54) Verfahren zur Kennzeichnung von Kunststoffen.

(57) Verfahren zum Erkennbarmachen eines Kunstoffs, wobei man dem Kunstoff bei oder nach seiner Herstellung 5 bis 10 000 PPb eines Fluoreszenz-Markers zusetzt.

EP 0 476 416 A2

Rank Xerox (UK) Business Services

Die Wiederverwendung von Kunststoffen aus Müll und Abfällen setzt voraus, daß man die Kunststoffe nach ihrer chemischen Beschaffenheit sortieren kann.

Man kann hierzu beispielsweise in einigen Fällen die Form des Kunststoffgegenstandes einem Hersteller oder Produkt zuordnen (Mustererkennung) oder man kann spektroskopische Methoden einsetzen. Diese sind unter den spezifischen Bedingungen nicht sicher genug, da Einstellung, Erhaltungszustand, Gebrauchsspuren, Verunreinigungen, Alter usw. die Proben sehr unterschiedlich erscheinen lassen und die Vielzahl der Objekte einen nicht realisierbaren Zeitaufwand verursachen. Letztlich kann man Kunststoffe auch über die Dichte klassieren.

Kunststoffe, die aus Molekülen mit einem hohen Anteil an Heteroatomen aufgebaut sind, haben in der Regel eine höhere spezifische Dichte als solche, die reine Kohlenwasserstoffe sind. Auf diese Weise läßt sich beispielsweise eine fraktionierte Vortrennung durchführen, bei der die Polyolefine wie Polypropylen, Hoch- und Niederdruck-Polyethylen in einer Fraktion anfallen.

Diese Fraktion hat im Müllaufkommen eine überragende Bedeutung. So besteht der durchschnittliche Kunststoffanteil im Haushaltsabfall zu 65 % aus Polyolefinen, 15 % Polystyrol, 10 % Polyvinylchlorid, 5 % Polyethylen-terephthalat und 5 % anderen Kunststoffen (Eu. Plast. News, 1989(12), 41).

Es besteht daher ein Bedürfnis, die Polyolefin-Fraktion weiter aufzutrennen, um recyclisierungsfähige Stoffe zu erhalten, Nur reine Stoffe sind sinnvoll wiederverwendungsfähig.

Es ist bekannt, Kunststoffe durch die Zugabe von Additiven in kleinen Mengen zu markieren, um sie in Prozessen wiederzuerkennen, Dies ist relativ einfach zu bewerkstelligen, wenn das Polymer über polare Gruppen verfügt, die Additive zu binden vermögen. So haben V. Nowotny und I., Alexandru (J. Appl. polym. Sci., 24, 1321-1328 (1979)) Lasermarkierungen von Polyethylenterephthalat mit Disperisonsfarbstoffen durchgeführt und hohe Auflösungen erhalten. Ähnliche Vorschläge, vorzugsweise zum Wiedererkennen von Produkten bestimmter Hersteller, betreffen den Einsatz von Fluoreszenzfarbstoffen (z.B. JA. Pat 62 271 734, 62 167 072, DOS 32 41 489, 29 18 487, US 4 329 378, 4 303 701, 4 813 973, EP 30 577).

Schwieriger wird es, wenn das Polymer keine polaren Gruppen enthält, wie dies bei den Polyolefinen der Fall ist. In diesen versagen die üblichen Additive. Um dieser Schwierigkeit aus dem Wege zu gehen, haben beispielsweise W.T. Tang, G. Hadziioannou, B.A. Smith, C.W. Frank vorgeschlagen (Polymer, 29 1313-1317 (1988)), Polystyrol durch Chlormethylierung für fluoreszenzfähige Farbstoffe aufnahmefähig zu machen. Es gibt weitere Vorschläge dieser Art, deren Kennzeichen ein separater Markierungsschritt ist. Diese Verfahren sind sämtlich für die erfindungsgemäße Aufgabe ungeeignet, da sie zwangsläufig eine Verlängerung des Herstellungsweges und somit eine nicht tragbare Verteuerung des Produkts bedeuten.

Gegenstand der Erfindung ist ein Verfahren zu Erkennbarmachen eines Kunststoffes, das dadurch gekennzeichnet ist, daß man dem Kunststoff bei oder nach seiner Herstellung 5-10 000 ppb eines Fluoreszenzmarkers zusetzt. Geeignet sind vorzugsweise Fluoreszenzfarbstoffe aus der Reihe der Cumarine (DE-OS 2 126 811, DE-OS 36 09 804, DE-OS 25 29 434), Perylenfarbstoffe (DE-OS 31 49 620), Benzanthrone (DE-OS 26 17 322, 26 17 321, 2 154 753), Anthrapyrimidine (EP 32 373: DE-OS 3 001 188) oder Anthrapyridone (JA 49 75 652: JA 46 76 927). Dem Substrat ensprechend müssen die Farbstoffe lipophil oder verzweigt substituiert sein.

Besonders bevorzugt ist die Zugabe von Komplexen der Seltenerdmetalle, insbesondere Eu- oder Tb-Komplexe, die sich durch eine scharfe Emmissions-Bande auszeichnen und die durch Beleuchtung mit einer normalen Lampe kenntlich gemacht werden können. Ein weiterer Vorzug dieser Substanzen ist es, eine wesentlich langlebigere Floureszenz zu haben, verglichen mit den üblichen organischen Fluoreszenzfarbstoffen, wodurch sich das Signal von der Fluoreszenz zufällig anwesender Substanzen leicht trennen läßt.

Der Zusatz solch kleiner Mengen Farbmarkers ändert die Eigenschaften der Polymeren nicht.

Die Erfindung betrifft auch die Anwendung des erfindungsgemäßen Erkennungsverfahrens zur Trennung von Kunsstoffmüll. Die Anregung des Farbstoffs in dem zu prüfenden Gegenstand, beispielsweise durch einen Laser, erzeugt gestreutes Emmissionslicht, das von einem Detektor aufgefangen und registriert wird. Dieses Signal wird zum Auslösen der Trennfunktion verwendet. Diese kann beispielsweise bei kleinen, granulierten Teilchen die elektrostatische Aufladung und Ablenkung in einem elektrischen Feld, oder bei größeren einfach eine mechanische Aussonderung sein.

Gegenstand der Erfindung ist somit auch ein Verfahren zum Sortieren von Kunststoffschrott oder Kunststoffmüll, das dadurch gekennzeichnet ist, daß man die durch Zusatz von Fluoreszenzmarkers erkennbar gemachten Kunststoffe aufgrund der emittierten Fluoreszenzstrahlung nach den Kunststoffsorten klassiert.

Dieses Verfahren, das sich durch große Einfachheit auszeichnet, erlaubt es, auch die Polyolefin-Fraktionen aus der Vortrennung über die Dichte weiter zu zerlegen. Verwendet man mehrere Farbmarker unterschiedlicher Emissionswellenlänge oder Intensität, dann kann man nebeneinander verschiedene Bestandteile der Polyolefinfraktion erkennen und abtrennen.

Ganz wesentlich ist ein hohes und breites Niveau der Gebrauchsechtheiten des Markierungsstoffes. Er muß ungiftig sein.

Die Farbstoffe werden in Mengen von 5-10 000 ppb eingesetzt. Es ist wegen der möglichen Farbverfälschung bei hohen Konzentrationen an Farbmarkern erwünscht, diesen in möglichst geringer Konzentration einzusetzen.

Beispiel 1

2 000 g Polyethylen werden mit 100 mg 3,9-bis[2-(5,6(1,1,3,3-tetramethyl)cyclopenta)-benzoxazolyl]-perylen gemischt und bei 200°C zu Platten von 2 mm Dicke verarbeitet. Die Fluoreszenz wird in Reflexion an der Oberfläche durch Exzitation im Absorptionsmaximum des Farbstoffs gemessen. Man erhält die Werte in Spalte 1:

|  | 1 | 2 |
|---|---|---|
| Wellenlänge der Exzitation: | 526 nm | 525 nm |
| Maximale Emission: | 576 nm | 573 nm |
| Stokes-Shift | 50 nm | 48 nm |
| Integriertes Peakflächensignal: | 1 115 120 | 774 122 |

Verfährt man wie oben angegeben und verwendet an Stelle des Polyethylen die gleiche Menge Polypropylen bei 230°C, so erhält man die in Spalte 2 angegebenen Werte.

Beispiel 2

Man verfährt wie in Beispiel 1, verwendet aber als Farbstoff 2-Methyl-[n-hexyl]-amino-dibenz[f,i,j]-isochinolin-7-on, (hergestellt nach Houben-Wey, Bd. 7/3c, S. 346 (1979), 4. Aufl.) dann erhält man für Polyethylen die in Spalte 1, für Polypropylen die in Spalte 2 genannten Werte:

|  | 1 | 2 |
|---|---|---|
| Wellenlänge der Exzitation: | 459 nm | 456 nm |
| Maximale Emission: | 532 nm | 536 nm |
| Stokes-Shift | 73 nm | 80 nm |
| Integriertes Peakflächensignal: | 598 039 | 236 602 |

Beispiel 3

Man verfährt wie in Beispiel 1, verwendet aber an Stelle des dort genannten Farbstoffs gleiche Mengen a) N,N-Dimethyl-tetrachlor-perylentetracarbonsäurediimid (hergestellt nach DOS 31 49 620) oder b) 7-Diethyl-amino-4-cyano-3-(2-[5-trifluormethyl]-thiadiazolyl)-cumarin, so erhält man für Polyethylen die in Spalte 1, für Polypropylen, die in Spalte 2 genannten Werte:

EP 0 476 416 A2

a)                                              1              2

Maximale Exzitation:              517 nm        514 nm

Maximale Emission:                549 nm        546 nm

Stokes-Shift                       32 nm         32 nm

Integriertes Peakflächensignal 957 713        544 367


b)

Maximale Exzitation:              521 nm        482 nm

Maximale Emission:                571 nm        571 nm

Stokes-Shift                       50 nm         89 nm

Integriertes Peakflächensignal: 1 119 877      348 007


Beispiel 4

Es wurden Probenplättchen aus Polycarbonat in den handelsüblichen Farben schwarz, weiß und transparent mit dem Farbstoff LISA gelb (9400 57400) versetzt.

Dazu wurden die Substanzen in Granulatform gemischt und zu Plättchen spritzgegossen. Anschließend wurde eine fluoreszenzspektroskopische Aufnahme von der Oberfläche gemacht.

Die Ergebnisse sind in der Tabelle zusammengestellt.

Das Fluoreszenzsignal des LISA-Farbstoffs ist bis zu Konzentrationen von $25 \times 10^{-4}$ [g/kg] eindeutig nachweisbar.

| Probe Trägersubstanz | Farbstoffkonz. $[\times 10^{-4}\ g/kg]$ | max. Emission | Integral |
|---|---|---|---|
| Polycarbonat | 0 | 579,7 | 2475 |
| schwarz | 5 | 578,0 | 4622 |
| | 25 | 569,8 | 24369 |
| Polycarbonat | 0 | 552,4 | 100580 |
| weiß | 5 | 571,4 | 427126 |
| | 25 | 576,3 | 1330803 |
| Polycarbonat | 50 | 571,4 | 631924 |
| farblos | 25 | 574,7 | 715873 |
| (transparent) | 0,5 | 571,4 | 92467 |


Beispiel 5

Es wurden 5 Probeplättchen aus Bisphenol-A-Polycarbonat hergestellt von denen jedes 0,01 Gew.-% eines Fluoreszenzfarbstoffs enthält.

Die Emissionsmaxima der Plättchen liegen wie folgt:

4

| Nr. | nm |
|---|---|
| 1 | 521 (grün) |
| 2 | 590 (gelb) |
| 3 | 595 (orange) |
| 4 | 623 (rot) |
| 5 | 635 (dunkelrot) |

Alle Plättchen werden mit der gleichen Wellenlänge von 480 nm angeregt und folgende Ergebnisse erhalten:

| Plättchen-Nr. | Emission nm | relative Peakhöhe |
|---|---|---|
| 1 | 514 | 285 |
| 2 | 571 | 201 |
| 3 | 560 | 265 |
| 4 | 588 | 315 |
| 5 | 599 | 314 |

Bei Bestrahlung von Plättchen 1 mit 482 nm war die Emission bei 513 nm und die relative Peakhöhe 268: bei Betrahlung von Plättchen 5 mit 576 nm war die Emission bei 597 nm und die relative Peakhöhe 316.

Somit ist die Emission und die Peakhöhe in gewissen Grenzen praktisch unabhängig von der Anregungswellenlänge. Dies bedeutet, daß man mit einer Anregungswellenlänge alle 5 Fluoreszenzfarbstoffe zur Emission anregen kann. Dies bedeutet, daß die 5 Plättchen auch bei Anregung mit nur einer Wellenlänge an ihrer Emission unterschieden werden können. Der Modellversuch zeigt, daß das erfindungsgemäße Klassierverfahren durchführbar und sogar automatisierbar ist.

Beispiel 6

266 mg (1 mmol) Naphthoyltrifluoraceton in 1000 ml Dichlorethan werden mit 366 mg (1 mmol) $EuCl_3.H_2O$ in 1000 ml Methanol/$H_2O$ 10:1 bei Zimmertemperatur 1 Stunde verrührt. Der entstandene Komplex wird auf Polycarbonatfolien (transparent, 116 $\mu$m) aufgetragen. Man erhält bei Anregung im Absorptionsmaximum des Diketons folgende Werte:

| | |
|---|---|
| Wellenlänge der Anregung: | 335 nm |
| Maximale Emission: | 615 nm |
| Stokes-Shift: | 270 nm |
| Integriertes Peakflächensignal: | 12 319 |

**Patentansprüche**

1. Verfahren zum Erkennbarmachen eines Kunststoffs, dadurch gekennzeichnet, daß man dem Kunststoff bei oder nach seiner Herstellung 5 bis 10 000 Gew.-% ppb eines Fluoreszenz-Markers zusetzt.

2. Verfahren zum Sortieren von Kunststoffschrott oder Kunststoffmüll, dadurch gekennzeichnet, daß man gemäß Anspruch 1 erkennbargemachten Kunststoffe nach den Kunststoffsorten aufgrund der emittierten Fluoreszenz-Strahlung klassiert.